# EUROPÄISCHE PATENTANMELDUNG

(11) **EP 3 451 584 A1**
(43) Veröffentlichungstag der Anmeldung: **06.03.2019**
(21) Anmeldenummer: 18188755.5
(22) Anmeldetag: 13.08.2018
(51) Int. Cl.: H04L 12/18, H04L 12/28, H04L 12/24

(54) **VERFAHREN ZUR ÜBERTRAGUNG VON GERÄTESPEZIFISCHEN DATEN ÜBER EIN DATENÜBERTRAGUNGSSYSTEM**

(30) Priorität: 23.08.2017 DE 102017119229
(71) Anmelder: Jenaer Antriebstechnik GmbH, 07745 Jena (DE)
(72) Erfinder: SEIDEL, Frank, 07751 Jena Cospeda (DE); KASPER, Christian, 07549 Gera (DE); MITTE, Kersten, 07749 Jena (DE)
(74) Vertreter: Engel, Christoph Klaus

(57) **Zusammenfassung**

Die vorliegende Erfindung betrifft ein Verfahren zur Übertragung von gerätespezifischen Daten über ein Datenübertragungssystem zu mehreren Geräten (02). In einem Schritt des Verfahrens erfolgt ein Aussenden einer mit einem Rundsendeidentifikator identifizierten Rundsendeankündigung (01) über das Datenübertragungssystem zu den Geräten (02).

Jedem der Geräte (02) sind ein individueller Geräteidentifikator und der Rundsendeidentifikator zugeordnet. Die einzelnen Geräte (02) werden in einen Zustand einer Bereitschaft zum Empfangen der gerätespezifischen Daten versetzt, nachdem die Rundsendeankündigung (01) empfangen wurde. Es erfolgt ein Aussenden von Datenempfangsbereitschaftsbestätigungen durch die einzelnen Geräte (02), nachdem das jeweilige Gerät (02) den Zustand der Bereitschaft zum Empfangen der gerätespezifischen Daten erreicht hat. Erfindungsgemäß erfolgt ein gemeinsames Aussenden der gerätespezifischen Daten über das Datenübertragungssystem an die Geräte (02), nachdem die Geräte (02) die Datenempfangsbereitschaftsbestätigungen ausgesendet haben. Die gerätespezifischen Daten werden in Form von Datensequenzen ausgesendet, wobei die einzelnen Geräte (02) jeweils eine Datensequenzempfangsbestätigung aussenden, nachdem sie eine der Datensequenzen empfangen haben.

## Beschreibung

Die vorliegende Erfindung betrifft ein Verfahren zur Übertragung von gerätespezifischen Daten über ein Datenübertragungssystem zu mehreren Geräten, bei denen es sich beispielsweise um Steuerungen von elektromechanischen Antrieben handelt. Bei den gerätespezifischen Daten handelt es sich beispielsweise um Firmware, sodass die erfindungsgemäße Übertragung der gerätespezifischen Daten zu den Geräten ein Update der Firmware in den einzelnen Geräten ermöglicht.

Die EP 0 695 057 B1 zeigt ein Verfahren zum Ausführen eines Rundsendeauftrages in einem Informationsnetz. Das Informationsnetz weist untereinander verbundene Knoteneinrichtungen und diesen zugeordnete Teilnehmereinrichtungen auf. Verfahrensgemäß wird eine Steuerinformation von einer der Teilnehmereinrichtungen an die zugeordnete Knoteneinrichtung übermittelt, um eine Rundsendenachricht zu identifizieren. Von dieser Knoteneinrichtung wird die Rundsendenachricht an weitere Knoteneinrichtungen gesendet, die anhand von in der Knoteneinrichtung zur Identifizierung aller Knoteneinrichtungen im Informationsnetz gespeicherten Knotenidentifikatoren ermittelt werden. Dabei wird als Zieladresse der Rundsendenachricht jeweils ein von den weiteren Knoteneinrichtungen freigehaltener Teilnehmeridentifikator übertragen. Wird der Teilnehmeridentifikator empfangen, so wird die Rundsendenachricht jeweils an zugeordnete Teilnehmereinrichtungen weitergeleitet, die anhand von in den Knoteneinrichtungen zur Identifizierung der jeweils zugeordneten Teilnehmereinrichtungen gespeicherten Teilnehmeridentifikatoren ermittelt werden. Die Teilnehmeridentifikatoren sind beispielsweise durch Anschlussnummern gebildet.

Die DE 11 2013 000 904 T5 zeigt ein Verfahren zum Durchführen von Aktualisierungen von Quellcode, der auf einer Vielzahl von Rechenknoten ausgeführt wird. Gemäß diesem Verfahren wird in einem der Rechenknoten eine Rundsendenachricht über eine Aktualisierungsankündigung empfangen. Die Aktualisierungsankündigung gibt an, dass eine Aktualisierung des Quellcodes stattfindet. Als Reaktion auf das Empfangen der Aktualisierungsankündigungsnachricht wird eine verteilte Sperre eingerichtet. Auf der Grundlage der verteilten Sperre wird die Ausführung des Quellcodes an einer bestimmten Position in dem Quellcode unterbrochen und es erfolgt ein direktes Aktualisieren des Quellcodes, einschließlich des Speicherns von Werkstückdaten im Speicher des Rechenknotens. Die Werkstückdaten entsprechen der Ausführung des Quellcodes. Nachdem das Aktualisieren des Quellcodes abgeschlossen ist, wird die Ausführung des Quellcodes mit den gespeicherten Werkstückdaten wieder aufgenommen.

Die US 2010/0262651 A1 lehrt ein Verfahren zum Vermeiden einer Überlastung eines Servers beim Versenden von Daten an Empfänger. Die Empfänger senden Antworten an den Server gemäß einem vordefinierten Profil.

Die US 2010/0274875 A1 zeigt eine Vorrichtung zur Datenverarbeitung und zum Verteilen von Dateien. Vor dem Verteilen der Dateien sendet ein Server ein Aktivierungsanforderungssignal an mehrere Clients.

In der US 9,342,291 B1 ist ein Verfahren zur individuellen Aktualisierung von Computergeräten über ein Datennetzwerk beschrieben. Bei diesem Verfahren werden Versionsinformationen über das Datennetzwerk ausgetauscht.

Die US 2011/0102148 A1 zeigt eine Datenübertragung an mehrere konfigurierbare elektronische Geräte. Die Geräte senden nach dem Einschalten eine Geräte-ID aus. Die Datenübertragung wird durch eine besondere vordefinierte Bitsequenz eingeleitet.

Die Aufgabe der vorliegenden Erfindung besteht ausgehend vom Stand der Technik darin, die Übertragung von gerätespezifischen Daten über ein Datenübertragungssystem zu mehreren mit dem Datenübertragungssystem verbundenen Geräten schneller ausführen zu können.

Die genannte Aufgabe wird gelöst durch ein Verfahren gemäß dem beigefügten Anspruch 1.

Das erfindungsgemäße Verfahren dient der Übertragung von gerätespezifischen Daten über ein Datenübertragungssystem zu mehreren mit dem Datenübertragungssystem verbundenen Geräten. Bei den Geräten handelt es sich bevorzugt um Steuerungen elektromechanischer Einrichtungen, insbesondere um Steuerungen, Servoverstärker bzw. Antriebsverstärker elektromechanischer Aktuatoren oder elektromechanischer Antriebe. Grundsätzlich kann es sich bei den Geräten aber auch um andere prozessor- bzw. controllerbasierte Rechenmaschinen handeln.

Das erfindungsgemäße Verfahren umfasst einen Schritt, in welchem ein Aussenden einer mit einem Rundsendeidentifikator identifizierten Rundsendeankündigung über das Datenübertragungssystem zu den mit dem Datenübertragungssystem verbundenen Geräten erfolgt. Jedem der Geräte sind ein individueller Geräteidentifikator und der für alle Geräte gleiche Rundsendeidentifikator zugeordnet. Durch das Aussenden der mit dem Rundsendeidentifikator identifizierten Rundsendeankündigung werden alle Geräte adressiert. Die individuellen Geräteidentifikatoren sind verschieden vom Rundsendeidentifikator. Die individuellen Geräteidentifikatoren sind bevorzugt eineindeutig.

Die einzelnen Geräte empfangen die Rundsendeankündigung, woraufhin sich die einzelnen Geräte individuell in einen Zustand einer Bereitschaft zum Empfangen der gerätespezifischen Daten versetzen. Da dies individuell in den einzelnen Geräten erfolgt, werden nicht alle Geräte in jedem Fall gleichzeitig den Zustand der Bereitschaft zum Empfangen der gerätespezifischen Daten erreichen.

In einem weiteren Schritt senden die einzelnen Geräte jeweils eine Datenempfangsbereitschaftsbestätigung aus, nachdem das jeweilige Gerät den Zustand der Bereitschaft zum Empfangen der gerätespezifischen Daten erreicht hat. Die Datenempfangsbereitschaftsbestätigungen werden über das Datenübertragungssystem versendet.

Nachdem alle Geräte jeweils den Zustand der Bereitschaft zum Empfangen der gerätespezifischen Daten erreicht und die jeweilige Datenempfangsbereitschaftsbestätigung ausgesendet haben, erfolgt erfindungsgemäß ein gemeinsames, gleichzeitiges Aussenden der gerätespezifischen Daten über das Datenübertragungssystem an die Geräte. Die Geräte empfangen die über das Datenübertragungssystem gesendeten gerätespezifischen Daten.

Ein besonderer Vorteil des erfindungsgemäßen Verfahrens besteht darin, dass das gemeinsame, gleichzeitige Aussenden der gerätespezifischen Daten wesentlich schneller als ein individuelles Aussenden der gerätespezifischen Daten erfolgen kann. Im Gegensatz zum Stand der Technik werden die Geräte gemeinsam in den Zustand der Bereitschaft zum Empfangen der gerätespezifischen Daten versetzt. Das erfindungsgemäße Verfahren ist bevorzugt zum parallelen Laden von Firmware und Konfigurationsdaten in die Geräte ausgebildet. Die Geräte müssen im Gegensatz zum Stand der Technik nicht nacheinander geupdatet und neu gestartet werden bzw. die zuletzt abgespeicherten Daten erneut geladen und mit dem Prozess erneut begonnen werden. Ein weiterer Vorteil des erfindungsgemäßen Verfahrens besteht darin, dass das verwendete Datenübertragungssystem nicht modifiziert werden muss, um das erfindungsgemäße Verfahren durchzuführen, sodass das verwendete Datenübertragungssystem normgemäß genutzt werden kann.

Das Datenübertragungssystem ist bevorzugt durch einen Datenbus gebildet, an welchen die Geräte angeschlossen sind. Der Datenbus ist bevorzugt durch einen Feldbus gebildet. Derartige Feldbusse sind beispielsweise unter Markennamen wie CAN-Bus, Profibus oder Ethercat bekannt. Die an den Feldbus angeschlossenen Geräte sind entsprechend bevorzugt durch Feldgeräte gebildet.

Das Datenübertragungssystem ist alternativ bevorzugt durch ein Datennetzwerk, wie beispielsweise Ethernet gebildet.

Das Datenübertragungssystem ist alternativ bevorzugt durch serielle Datenübertragungsverbindungen zwischen den Geräten gebildet. Die seriellen Datenübertragungsverbindungen sind bevorzugt jeweils durch eine UART-Verbindung oder durch eine USB-Verbindung gebildet.

Das Datenübertragungssystem ist alternativ bevorzugt durch kabellose Datenübertragungsverbindungen zwischen den Geräten gebildet. Die kabellosen Datenübertragungsverbindungen sind bevorzugt jeweils durch eine Bluetooth-Verbindung, durch eine WLAN-Verbindung, durch eine RFID-Verbindung oder durch eine induktive Verbindung gebildet.

Bei bevorzugten Ausführungsformen des erfindungsgemäßen Verfahrens erfolgen das Aussenden der Rundsendeankündigung und das Aussenden der gerätespezifischen Daten durch einen zentralen Rechner. Dieser zentrale Rechner stellt einen Master dar, während die an das Datenübertragungssystem angeschlossenen Geräte jeweils einen Slave bzw. einen Teilnehmer darstellen. Der zentrale Rechner dient zudem zum Empfangen der einzelnen Datenempfangsbereitschaftsbestätigungen. Nachdem der zentrale Rechner sämtliche der Datenempfangsbereitschaftsbestätigungen empfangen hat, sendet er die gerätespezifischen Daten über das Datenübertragungssystem an die Geräte.

Bei bevorzugten Ausführungsformen des erfindungsgemäßen Verfahrens definieren die gerätespezifischen Daten jeweils einen durch das jeweilige Gerät bestimmungsgemäß auszuführenden Prozess, insbesondere einen Ablauf und/oder Parameter des auszuführenden Prozesses. Bei dem durch das jeweilige Gerät auszuführenden Prozess handelt es sich bevorzugt um ein Steuern eines elektromechanischen Antriebes oder einer anderen eine mechanische, elektrische, thermische oder strahlungstechnische Größe beeinflussenden Vorrichtung. Die gerätespezifischen Daten definieren diesen Prozess jeweils dadurch, dass sie Parameter und Programmbestanteile zur Steuerung des Prozesses umfassen. Die gerätespezifischen Daten umfassen besonders bevorzugt Firmware und/oder Konfigurationsdaten des jeweiligen Gerätes. Die gerätespezifischen Daten liegen bevorzugt in Form von Quellcode vor.

Bei bevorzugten Ausführungsformen des erfindungsgemäßen Verfahrens umfasst der Schritt des Versetzens der einzelnen Geräte in den Zustand der Bereitschaft zum Empfangen der gerätespezifischen Daten jeweils ein Unterbrechen des durch das jeweilige Gerät bestimmungsgemäß auszuführenden Prozesses. Somit wird beispielsweise das Steuern des elektromechanischen Antriebes unterbrochen, woraufhin das Gerät zum Empfangen der gerätespezifischen Daten bereit ist. Das Unterbrechen des durch das jeweilige Gerät bestimmungsgemäß auszuführenden Prozesses erfolgt bevorzugt bedingungslos und sofort. Das Unterbrechen des durch das jeweilige Gerät bestimmungsgemäß auszuführenden Prozesses erfolgt alternativ bevorzugt durch einen Prozess zum geordneten Beenden von Teilprozessen des Prozesses, d. h. durch ein Herunterfahren des Gerätes. Das geordnete Beenden von Teilprozessen kann u. a. ein Speichern von Prozessdaten umfassen.

Bei bevorzugten Ausführungsformen des erfindungsgemäßen Verfahrens ruht der bestimmungsgemäß auszuführende Prozess im Zustand der Bereitschaft des jeweiligen Gerätes zum Empfangen der gerätespezifischen Daten.

Das Versetzen der einzelnen Geräte in den Zustand der Bereitschaft zum Empfangen der gerätespezifischen Daten umfasst bevorzugt ein Überführen des jeweiligen Gerätes in einen bezogen auf den bestimmungsgemäß auszuführenden Prozess stabilen und sicheren Zustand des jeweiligen Gerätes. Dieser stabile und sichere Zustand des jeweiligen Gerätes ist bevorzugt dadurch gekennzeichnet, dass die durch das jeweilige Gerät gesteuerte Vorrichtung in einen Zustand versetzt ist, in welchem sie keinen Schaden erfahren oder verursachen kann.

Bei bevorzugten Ausführungsformen des erfindungsgemäßen Verfahrens erfolgen das Aussenden und das Übertragen der gerätespezifischen Daten in Form von Datensequenzen. Die Datensequenzen umfassen in ihrer Gesamtheit die gerätespezifischen Daten.

Bei bevorzugten Ausführungsformen des erfindungsgemäßen Verfahrens senden die einzelnen Geräte jeweils eine Datensequenzempfangsbestätigung über das Datenübertragungssystem aus, nachdem sie eine der Datensequenzen empfangen haben. Ein Empfangen der Datensequenzempfangsbestätigung führt bevorzugt dazu, dass eine weitere der Datensequenzen ausgesendet wird. Die Datensequenzempfangsbestätigungen werden bevorzugt durch den zentralen Rechner über das Datenübertragungssystem empfangen, woraufhin dieser eine weitere der Datensequenzen über das Datenübertragungssystem aussendet.

Bei bevorzugten Ausführungsformen des erfindungsgemäßen Verfahrens wird eine weitere Datensequenzen erst dann ausgesendet, wenn sämtliche der Geräte den Empfang der zuletzt gesendeten Datensequenz durch jeweils eine Datensequenzempfangsbestätigung bestätigt haben. Sollte eines der Geräte, welche die Datensequenz empfangen haben, keine Datensequenzempfangsbestätigung aussenden oder einen Fehler melden, dann erfolgt eine Wiederholung des Sendens der zuletzt gesendeten Datensequenz. Sollte trotzdem der Fehler weiterhin auftreten, wird bevorzugt nach Überschreitung einer vordefinierten Zeitdauer das wiederholte Aussenden der Datensequenz beendet und ein Fehler gemeldet. Alternativ bevorzugt wird das Aussenden weiterer Datensequenzen fortgesetzt und nach dem Aussenden aller Datensequenzen werden die als fehlerhaft erkannten Geräte gemeldet oder es erfolgt ein erneutes Aussenden der Datensequenzen beschränkt auf die als fehlerhaft erkannten Geräte.

Die Datensequenzempfangsbestätigungen umfassen bevorzugt jeweils den individuellen Geräteidentifikator des die jeweilige Datensequenzempfangsbestätigung aussendenden Gerätes, sodass insbesondere der zentrale Rechner erkennen kann, welches Gerät die Datensequenzempfangsbestätigung ausgesendet hat.

Die Datensequenzempfangsbestätigungen umfassen bevorzugt jeweils eine aus der jeweils empfangenen Datensequenz gebildete Prüfsumme, sodass insbesondere der zentrale Rechner erkennen kann, ob die von ihm ausgesendete Datensequenz durch das jeweilige Gerät korrekt empfangen wurde.

Die Datensequenzen sind bevorzugt jeweils durch ein Servicedatenobjekt (SDO) oder durch einen Datenblock gebildet. Derartige Servicedatenobjekte (SDO) werden beispielsweise gemäß der CANopen-Norm versendet.

Bei bevorzugten Ausführungsformen des erfindungsgemäßen Verfahrens werden die gerätespezifischen Daten gemeinsam mit einer aus den gerätespezifischen Daten gebildeten Prüfsumme ausgesendet, sodass die einzelnen Geräte den korrekten Empfang der gerätespezifischen Daten prüfen können. Alternativ oder ergänzend wird bevorzugt eine die Menge der gerätespezifischen Daten beschreibende Information gemeinsam mit gerätespezifischen Daten ausgesendet, welche ebenfalls dazu dient, dass die einzelnen Geräte den korrekten Empfang der gerätespezifischen Daten prüfen können.

Bei bevorzugten Ausführungsformen des erfindungsgemäßen Verfahrens stellen die einzelnen Geräte anhand der aus den gerätespezifischen Daten gebildeten Prüfsumme und/oder anhand der die Menge der gerätespezifischen Daten beschreibenden Information fest, ob die empfangenen gerätespezifischen Daten korrekt und/oder vollständig sind. Nachdem das jeweilige Gerät festgestellt hat, dass es die gerätespezifischen Daten korrekt und/oder vollständig empfangen hat, wird das Empfangen der gerätespezifischen Daten durch das jeweilige Gerät bevorzugt beendet und es wird das Ausführen des durch das jeweilige Gerät bestimmungsgemäß auszuführenden Prozesses fortgesetzt.

Bei bevorzugten Ausführungsformen des erfindungsgemäßen Verfahrens werden die gerätespezifischen Daten in Form der Firmware und/oder der Konfigurationsdaten nach dem Empfangen durch das jeweilige Gerät zunächst in einen nichtflüchtigen Speicher des jeweiligen Gerätes gespeichert und anschließend vom nichtflüchtigen Speicher in einen flüchtigen Speicher des jeweiligen Gerätes geladen, um den durch das jeweilige Gerät bestimmungsgemäß auszuführenden Prozess zu definieren. Nachdem die gerätespezifischen Daten in Form der Firmware und/oder der Konfigurationsdaten in den flüchtigen Speicher des jeweiligen Gerätes geladen wurde, stehen sie insbesondere einem Prozessor oder einem Controller des jeweiligen Gerätes zur Verfügung, um en Programmablauf im Prozessor bzw. Controller zu definieren. Bei dem nichtflüchtigen Speicher des jeweiligen Gerätes handelt es sich bevorzugt um einen Flashspeicher oder EEPROM. Bei dem flüchtigen Speicher des jeweiligen Gerätes handelt es sich bevorzugt um einen RAM.

Weitere Vorteile, Einzelheiten und Weiterbildungen der Erfindung ergeben sich aus der nachfolgenden Beschreibung bevorzugter Ausführungsformen der Erfindung, unter Bezugnahme auf die Zeichnung. Es zeigen:
- Fig. 1:: eine Veranschaulichung eines erfindungsgemäß durchzuführenden Aussendens einer mit einem Rundsendeidentifikator identifizierten Rundsendeankündigung an mehrere Geräte; und
- Fig. 2:: eine Veranschaulichung eines erfindungsgemäß durchzuführenden Aussendens von Datenempfangsbereitschaftsbestätigungen durch die in Fig. 1 gezeigten Geräte.

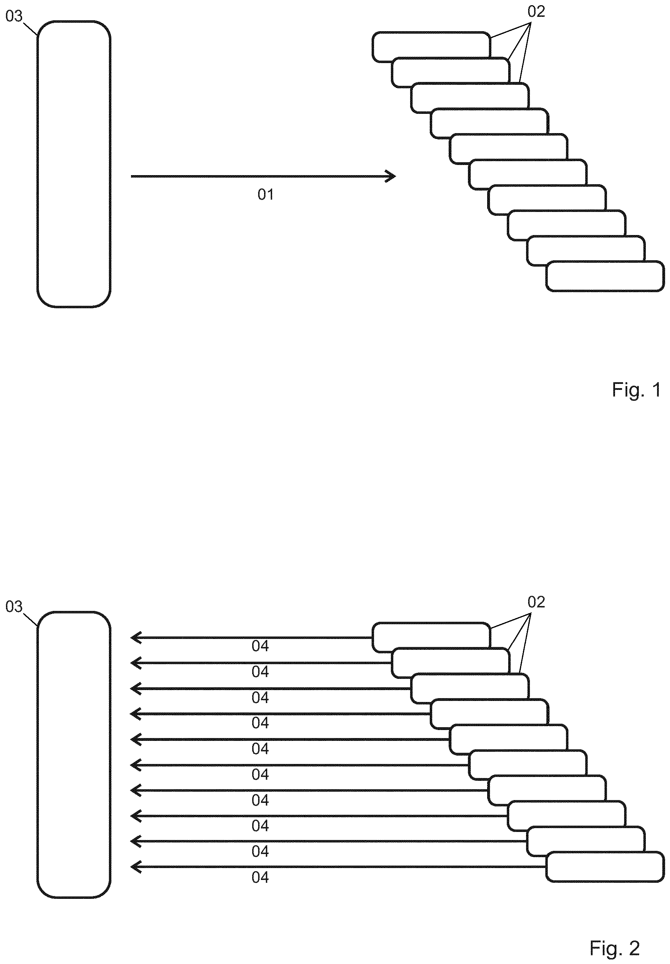

Fig. 1 zeigt eine Veranschaulichung eines erfindungsgemäß durchzuführenden Aussendens einer mit einem Rundsendeidentifikator identifizierten Rundsendeankündigung 01 an mehrere Geräte 02. Bei den Geräten 02 handelt es sich beispielsweise um Antriebssteuerungen bzw. Antriebsverstärker. Die Rundsendeankündigung 01 wird durch einen Master 03 über einen Feldbus (nicht dargestellt) an die Geräte 02 gesendet. Die Geräte 02 stellen somit die Teilnehmer bzw. Slaves dar. Die Geräte 02 weisen jeweils einen individuellen Geräteidentifikator, d. h. eine individuelle Teilnehmeradresse auf, die beispielsweise durch eine laufende Nummerierung von "1" bis "n" gegeben sein kann. Zudem ist allen Geräten 02 der Rundsendeidentifikator zugeordnet, der beispielsweise "255" lauten kann.

Fig. 2 zeigt eine Veranschaulichung eines erfindungsgemäß durchzuführenden Aussendens von Datenempfangsbereitschaftsbestätigungen 04 durch die in Fig. 1 gezeigten Geräte 02 an den Master 03. Die Datenempfangsbereitschaftsbestätigungen 04 beinhalten jeweils den individuellen Geräteidentifikator des jeweiligen Gerätes 02. Der Master 03 empfängt die Datenempfangsbereitschaftsbestätigungen 04.

Nachdem der Master 03 die Datenempfangsbereitschaftsbestätigungen 04 aller Geräte empfangen hat, sendet der Master gerätespezifische Firmwareaktualisierungen gemeinsam und gleichzeitig an alle Geräte 02 unter Verwendung des Rundsendeidentifikators, was der Veranschaulichung in Fig. 1 entspricht. Das Senden der Firmwareaktualisierungen kann beispielweise gemäß der CANopen-Norm erfolgen, wofür die Firmwareaktualisierungen über einen SDO-Transfer versendet werden. Hierbei beträgt die maximale Nutzdatenmenge beispielhaft 8 Byte. Nach jeder Übertragung eines SDO erfolgt eine Antwort des empfangenden Gerätes 02 mit einer SDO-Empfangsbestätigung, was wiederum der Veranschaulichung in Fig. 2 entspricht.

Eine alternative Übertragungsvariante ist der Blocktransfer, bei welchem ein größerer Block von beispielsweise 127 mal 8 Bytes Nutzdaten übertragen wird. Erst nach Empfangen aller Daten des Blockes erfolgt eine Antwort des empfangenden Gerätes 02 mit einer den individuellen Geräteidentifikator des jeweiligen Gerätes 02 beinhaltenden Empfangsbestätigung, was wiederum der Veranschaulichung in Fig. 2 entspricht.

Durch den Master 03 werden die Firmwareaktualisierungen als SDO- oder Blocktransfer parallel an alle Geräte 02 gleichzeitig übermittelt. Dadurch ist eine Reduzierung der Aktualisierungszeiten im Vergleich zum Stand der Technik um den Faktor der Anzahl der Geräte 02 möglich. Gemäß einem Beispiel betragen die Übertragungsrate des Feldbusses 1 Mbit/s und die Übertragungsdauer pro Nachricht 100 µs. Die erfindungsgemäße Übertragung der Firmwareaktualisierungen dauert beispielhaft bei 100 Geräten nicht mehr wie beim Stand der Technik 100 · 100 µs = 10 ms, sondern nur einmal 100 µs für eine Nachricht. Beim SDO-Singletransfer ist die eingesparte Zeit nur beim Aussenden der gerätespezifischen Firmwareaktualisierungen über den Feldbus an die Geräte 02 wirksam. Der erfindungsgemäße Vorteil macht sich vor allem beim Blocktransfer bemerkbar. Bei einem beispielhaften Datenvolumen von 1 MB sind bei einer maximal 8 Byte großen Nutzdatenübertragung etwa 131.000 Zyklen nötig, was einer Dauer von etwa 13 s für ein einzelnes Gerät und gemäß dem Stand der Technik bei 100 Geräten einer Dauer von etwa 22 min entspricht. Durch die erfindungsgemäße parallele Übertragung der Firmwareaktualisierungen kann die erforderliche Dauer somit von etwa 22 min auf etwa 13 s reduziert werden.

### Bezugszeichenliste

- 01: Rundsendeankündigung
- 02: Gerät
- 03: Master
- 04: Datenempfangsbereitschaftsbestätigung

## Patentansprüche

1. Verfahren zur Übertragung von gerätespezifischen Daten über ein Datenübertragungssystem zu mehreren mit dem Datenübertragungssystem verbundenen Geräten (02), folgende Schritte umfassend:
- Aussenden einer mit einem Rundsendeidentifikator identifizierten Rundsendeankündigung (01) über das Datenübertragungssystem zu den mit dem Datenübertragungssystem verbundenen Geräten (02), wobei jedem der Geräte (02) ein individueller Geräteidentifikator und der Rundsendeidentifikator zugeordnet sind;
- Versetzen der einzelnen Geräte (02) in einen Zustand einer Bereitschaft zum Empfangen der gerätespezifischen Daten, nachdem die Rundsendeankündigung (01) empfangen wurde;
- Aussenden von Datenempfangsbereitschaftsbestätigungen (04) durch die einzelnen Geräte (02), nachdem das jeweilige Gerät (02) den Zustand der Bereitschaft zum Empfangen der gerätespezifischen Daten erreicht hat; und
- gemeinsames Aussenden der gerätespezifischen Daten über das Datenübertragungssystem an die Geräte (02), nachdem die Geräte (02) die Datenempfangsbereitschaftsbestätigungen (04) ausgesendet haben, **dadurch gekennzeichnet, dass** die gerätespezifischen Daten in Form von Datensequenzen ausgesendet werden, wobei die einzelnen Geräte (02) jeweils eine Datensequenzempfangsbestätigung aussenden, nachdem sie eine der Datensequenzen empfangen haben, wobei die Datensequenzempfangsbestätigungen jeweils den individuellen Geräteidentifikator des jeweils bestätigenden Gerätes (02) umfassen, und wobei die Datensequenzempfangsbestätigungen jeweils eine aus der jeweils empfangenen Datensequenz gebildete Prüfsumme umfassen.

2. Verfahren nach Anspruch 1, **dadurch gekennzeichnet, dass** das Datenübertragungssystem durch einen Feldbus, durch ein Datennetzwerk, durch serielle Datenübertragungsverbindungen oder durch kabellose Datenübertragungsverbindungen zwischen den Geräten (02) gebildet ist.

3. Verfahren nach Anspruch 1 oder 2, **dadurch gekennzeichnet, dass** das Aussenden der Rundsendeankündigung (01) und das Aussenden der gerätespezifischen Daten durch einen zentralen Rechner (03) erfolgen.

4. Verfahren nach Anspruch 3, **dadurch gekennzeichnet, dass** die einzelnen Datenempfangsbereitschaftsbestätigungen durch den zentralen Rechner (03) empfangen werden, wobei die gerätespezifischen Daten über das Datenübertragungssystem durch den zentralen Rechner (03) an die Geräte (02) gesendet werden, nachdem der zentrale Rechner (03) sämtliche der Datenempfangsbereitschaftsbestätigungen empfangen hat.

5. Verfahren nach einem der Ansprüche 1 bis 4, **dadurch gekennzeichnet, dass** die gerätespezifischen Daten einen durch das jeweilige Gerät (02) bestimmungsgemäß auszuführenden Prozess definieren.

6. Verfahren nach Anspruch 5, **dadurch gekennzeichnet, dass** es sich bei dem durch das jeweilige Gerät (02) bestimmungsgemäß auszuführenden Prozess um ein Steuern eines elektromechanischen Antriebes handelt.

7. Verfahren nach Anspruch 5 oder 6, **dadurch gekennzeichnet, dass** das Versetzen der einzelnen Geräte (02) in den Zustand der Bereitschaft zum Empfangen der gerätespezifischen Daten ein Unterbrechen des durch das jeweilige Gerät (02) bestimmungsgemäß auszuführenden Prozesses umfasst.

8. Verfahren nach einem der Ansprüche 1 bis 7, **dadurch gekennzeichnet, dass** die gerätespezifischen Daten Firmware und/oder Konfigurationsdaten für die Geräte (02) umfassen.

9. Verfahren nach einem der Ansprüche 1 bis 8, **dadurch gekennzeichnet, dass** eine weitere der Datensequenzen erst dann ausgesendet wird, wenn sämtliche der Geräte (02) den Empfang der zuletzt gesendeten Datensequenz durch jeweils eine Datensequenzempfangsbestätigung bestätigt haben.

10. Verfahren nach einem der Ansprüche 1 bis 9, **dadurch gekennzeichnet, dass** eine Wiederholung des Sendens der zuletzt gesendeten Datensequenz erfolgt, wenn eines der Geräte (02), welche die Datensequenz empfangen haben, keine Datensequenzempfangsbestätigung aussendet oder einen Fehler meldet.

11. Verfahren nach einem der Ansprüche 1 bis 10, **dadurch gekennzeichnet, dass** die Datensequenzen jeweils durch ein Servicedatenobjekt oder durch einen Datenblock gebildet sind.

12. Verfahren nach einem der Ansprüche 1 bis 11, **dadurch gekennzeichnet, dass** die gerätespezifischen Daten gemeinsam mit einer aus den gerätespezifischen Daten gebildeten Prüfsumme oder mit einer die Menge der gerätespezifischen Daten beschreibenden Information ausgesendet werden.

13. Verfahren nach Anspruch 12, **dadurch gekennzeichnet, dass** die einzelnen Geräte (02) anhand der aus den gerätespezifischen Daten gebildeten Prüfsumme und/oder anhand der die Menge der gerätespezifischen Daten beschreibenden Information feststellen, ob die empfangenen gerätespezifischen Daten korrekt und/oder vollständig sind.

14. Verfahren nach Anspruch 13, **dadurch gekennzeichnet, dass** das jeweilige Gerät (02) das Empfangen der gerätespezifischen Daten beendet und das Ausführen eines durch das jeweilige Gerät (02) bestimmungsgemäß auszuführenden Prozesses fortsetzt, wenn das Gerät (02) feststellt, dass es die gerätespezifischen Daten korrekt und/oder vollständig empfangen hat.

15. Verfahren nach einem der Ansprüche 1 bis 14, **dadurch gekennzeichnet, dass** die gerätespezifischen Daten in Form der Firmware und/oder der Konfigurationsdaten nach dem Empfangen durch das jeweilige Gerät (02) zunächst in einen nichtflüchtigen Speicher des jeweiligen Gerätes (02) gespeichert werden und anschließend vom nichtflüchtigen Speicher in einen flüchtigen Speicher des jeweiligen Gerätes (02) geladen werden, um einen durch das jeweilige Gerät (02) bestimmungsgemäß auszuführenden Prozess zu definieren.
